# FASCICULE DE BREVET EUROPEEN

(11) **EP 3 022 511 B1**
(45) Date de publication et mention de la délivrance du brevet: **30.01.2019**
(21) Numéro de dépôt: 14739726.9
(22) Date de dépôt: 04.07.2014
(51) Int. Cl.: F28F 9/02

(54) **ÉCHANGEUR DE CHALEUR AVEC UN BLOC D'ADAPTATION FIXÉ SUR UNE PLAQUE D'EXTRÉMITÉ, ET PROCÉDÉ DE FABRICATION ASSOCIÉ**
WÄRMETAUSCHER MIT EINER AN EINER ENDPLATTE FIXIERTEN ADAPTEREINHEIT UND ZUGEHÖRIGES VERFAHREN ZUR HERSTELLUNG
HEAT EXCHANGER WITH AN ADAPTER UNIT FIXED TO AN ENDPLATE, AND ASSOCIATED METHOD OF MANUFACTURE

(30) Priorité: 19.07.2013 FR 1357162
(43) Date de publication de la demande: 25.05.2016
(73) Titulaire: Valeo Systemes Thermiques, 78320 Le Mesnil-Saint-Denis (FR)
(72) Inventeur: DENOUAL, Christophe, F-72430 Noyen sur Sarthe (FR); POURMARIN, Alain, F-72210 La Suze s/Sarthe (FR); TISON, Frédéric, F-72230 Guecelard (FR)
(74) Mandataire: Metz, Gaëlle
(86) Numéro de dépôt international: PCT/EP2014/064378
(87) Numéro de publication internationale: WO 2015/007550

(56) Documents cités:
- EP-A1- 2 023 071
- WO-A1-2012/104077
- FR-A1- 2 962 800
- FR-A1- 2 973 106
- JP-A- H11 101 591
- US-A- 4 487 038
- US-A1- 2010 243 200
- US-A1- 2011 303 402

## Description

La présente invention concerne le domaine des échangeurs de chaleur et vise notamment celui des échangeurs utilisés dans les véhicules automobiles, plus particulièrement celui des échangeurs utilisés dans les boucles de climatisation et/ou de gestion de la température des batteries électriques.

Il est connu des échangeurs thermiques parcourus par deux fluides : un fluide réfrigérant et un fluide caloporteur, le premier refroidissant le second.

Les échangeurs destinés à cet usage sont constitués d'une pluralité de composants qui après assemblage forment un faisceau dans lequel circulent les fluides.

En fabrication, les composants du faisceau sont généralement pré-assemblés en différents éléments dans le cadre d'opérations d'assemblage, avant d'être rendus solidaires de façon étanche par brasage en une seule étape par exemple par passage dans un four.

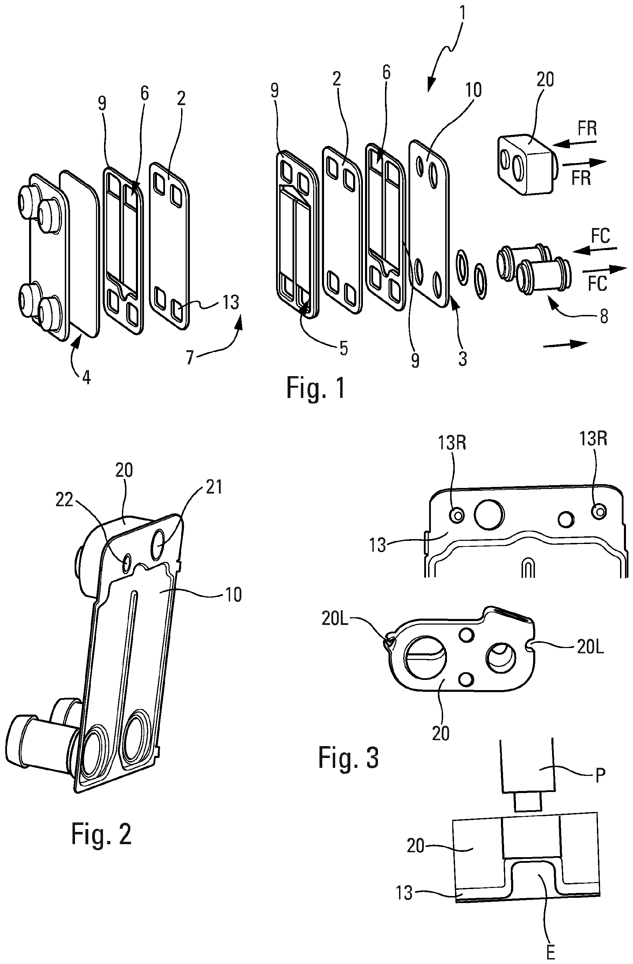

La figure 1 illustre un exemple d'échangeur de ce type en vue éclatée. Il est destiné à assurer un transfert thermique entre un premier fluide, notamment un fluide caloporteur tel que de l'eau glycolée et un second fluide, qui peut être réfrigérant, gazeux, diphasique ou liquide. L'échangeur comprend une pluralité de plaques 5 et 6 empilées selon une direction longitudinale. Les plaques constituent des canaux parcourues par le premier fluide et par le second fluide, les canaux pour le premier fluide alternant avec les canaux pour le second fluide dans la direction d'empilement des plaques.

A une extrémité 3 du faisceau, celui-ci est délimité par une plaque d'extrémité 10 mettant en communication le faisceau avec des circuits de circulation du premier et du second fluide, à l'aide d'un dispositif de raccordement 8, formés ici de deux tubulures, pour le fluide caloporteur FC, et d'une bride 20, pour le fluide réfrigérant FR.

Ce dernier élément forme un bloc métallique massif, par exemple en alliage d'aluminium, qui sert à raccorder un composant du circuit de fluide réfrigérant, non représenté sur la figure, à l'échangeur. Il est usiné et est traversé par deux éléments de conduit, désignés par la suite dans la présente demande par conduits de distribution, communiquant chacun sur une face dans laquelle ils débouchent avec un orifice correspondant percé dans la plaque d'extrémité 10.

En fabrication, il se pose le problème de la liaison avant brasage et du maintien du bloc d'adaptation 20 à la plaque d'extrémité 10. La figure 2 montre cet ensemble de pièces pré-assemblé.

Différentes solutions à ce problème sont envisageables.

Il est tout d'abord possible d'assurer le maintien des deux composants par un artifice extérieur tel qu'un cerclage, un appui sur une chaise de brasage. Cette solution n'est cependant pas applicable lorsque l'assemblage constitue un sous ensemble qui sera lui même assemblé à d'autres composants.

Il est aussi possible de déformer l'un des composants sur l'autre. Par exemple, en référence à la figure 2, le bloc 20 pourrait être lié à la plaque par une opération de déformation visant à évaser au moins l'un des conduits 21 ou 22 du bloc au niveau de l'ouverture correspondante de la plaque d'extrémité. Cette solution est cependant difficilement applicable dans la pratique, en raison du faible diamètre d'un des canaux, de l'ordre de 5 mm, qui ne permet pas l'évasage.

Il est encore possible d'effectuer un clinchage entre les deux composants. Cette opération consiste d'une part à déformer localement la plaque d'extrémité 13, de manière à former des rivets 13R sur celle-ci et d'autre part à usiner des logements 20L de réception des rivets de la plaque dans le bloc d'adaptation. Sur la figure 3, on voit que ces logements sont réalisés dans des excroissances latérales par rapport au bloc. Ces excroissances sont traversantes. Ensuite, on assemble les deux pièces en engageant les rivets dans leur logement respectif sur le bloc. Enfin le fond du rivet de la plaque est écrasé dans le trou du bloc entre une enclume E d'un côté et un poinçon P de l'autre. Cette succession d'opérations est illustrée par la figure 3.

Cette solution bien qu'envisageable industriellement présente plusieurs inconvénients.

Il faut prévoir une zone libre sur la plaque pour la réalisation des reliefs et des excroissances latérales pour loger les rivets. Il en résulte une augmentation de l'encombrement du bloc d'adaptation, du poids et du coût du composant.

En outre, la mise en oeuvre de cette technique implique des passes supplémentaires sur l'outil d'emboutissage ce qui implique un coût composant supplémentaire.

Un accès doit encore être prévu pour le clinchage du bloc d'adaptation. Cela implique une augmentation de l'encombrement du bloc d'adaptation, du poids et du coût composant.

Il est aussi à noter que la matière est amincie après clinchage. Il s'ensuit un risque de réduction de la tenue à la corrosion externe dans cette zone.

Une autre solution serait d'effectuer un poinçonnage entre les deux composants. Dans cette opération les rivets sont usinés dans le bloc d'adaptation et des orifices correspondants sont percés dans la plaque. Les deux éléments sont assemblés avec introduction des rivets dans les orifices de la plaque puis les rivets sont déformés de manière à immobiliser la plaque entre les extrémités déformées des rivets et la face du bloc en contact avec la plaque. Cette solution présente l'inconvénient de nécessiter des reliefs spécifiques sur le bloc d'adaptation ce qui implique une augmentation de l'encombrement du bloc d'adaptation, du poids et du coût composant. En outre elle induit un risque de fuite externe.

Le document EP2023071 divulgue un échangeur de chaleur selon le préambule de la revendication 1 et un procédé selon le préambule de la revendication 8.

L'invention a pour objet la mise au point d'un mode d'assemblage d'une plaque et d'un bloc d'adaptation ou bride qui ne présente pas les inconvénients des solutions présentées ci-dessus.

C'est ainsi que l'invention porte sur un échangeur de chaleur comprenant un faisceau d'échange thermique entre fluides, une plaque d'extrémité dudit faisceau, ladite plaque étant pourvues d'orifices de distribution de fluide dans le faisceau, et un bloc d'adaptation à un circuit de fluide externe, ayant un ou des conduits de distribution de fluide en correspondance avec l'un desdits ou lesdits orifices de distribution de la plaque d'extrémité, et étant fixé par une face à la plaque d'extrémité.

Selon l'invention, la plaque d'extrémité comprend au moins une semi-découpe maintenue par sertissage dans un logement ménagé, notamment usiné ou matricé à froid, dans la face du bloc en contact avec la plaque.

Le terme de semi-découpe signifie que la tôle dans laquelle la plaque est réalisée est découpée de manière à former une languette reliée à la plaque par une partie seulement du contour de ladite languette. A titre d'exemple, ladite languette est de forme polygonale, rectangulaire notamment, retenue par un côté à la plaque. La languette est parallèle par rapport à la surface de la plaque et en saillie. Il pourra s'agir d'un embouti crevé.

La solution de l'invention permet de pallier les inconvénients des techniques évoquées ci-dessus. Ainsi l'opération de sertissage par semi découpe permet d'utiliser le bloc comme enclume, en profitant de son caractère massique. En outre, on ne crée pas de zones de la plaque qui seraient amincies et affaiblies.

Conformément à un mode de réalisation avantageux, la semi-découpe et son logement associé sont ménagés en périphérie de l'un des orifices de distribution.

Cette disposition de la semi découpe permet de ne pas exposer la zone de liaison à la corrosion externe.

Ladite semi-découpe pourra avantageusement s'étendre, notamment radialement, à partir de la périphérie de l'un des orifices de façon à se trouver en dehors du passage entre ledit faisceau et ledit bloc. Ainsi, en s'assurant que la semi découpe ne s'étend pas dans la section hydraulique de l'orifice on ne perturbe pas l'écoulement du fluide au travers de celui-ci.

De préférence, la plaque comprend deux dits orifices de distribution de fluide associés à deux dits conduits de distribution sur le bloc d'adaptation, et une dite semi-découpe est sertie dans un dit logement à la périphérie de chacun des deux orifices.

L'invention trouve une application particulière dans un échangeur de chaleur dont le faisceau d'échange de chaleur est réalisé par empilement de plaques ménageant entre elles des conduits de circulation de chacun des fluides.

Plus particulièrement, les dits orifices sont agencés, l'un pour l'alimentation en fluide, l'autre pour le retour du fluide après échange de chaleur.

Il pourra avantageusement s'agir d'un échangeur destiné à l'échange de chaleur entre un liquide caloporteur et un fluide frigorigène, c'est-à-dire, un fluide susceptible de changer de phase lors de l'échange de chaleur.

L'invention porte également sur un procédé de fixation d'un bloc d'adaptation avec au moins un conduit de distribution de fluide sur une plaque d'extrémité d'un échangeur de chaleur, le procédé comprenant une étape de mise en place du bloc et de maintien sur la plaque en préparation de leur brasage. Le procédé est caractérisé par le fait qu'une semi-découpe est réalisée dans la plaque et un logement, notamment un lamage, est réalisé dans le bloc de forme correspondante à celle de la semi-découpe, le maintien étant obtenu par sertissage de la semi-découpe de la plaque dans le logement du bloc.

Ledit logement est formé, par exemple, par usinage ou matriçage à froid et ladite semi-découpe (110, 120) est formée, notamment, par emboutissage et crevage.

Ladite semi-découpe est avantageusement obtenue par la même opération que l'opération permettant d'obtenir le ou les orifices de distribution de fluide, prévus sur celle-ci.

Plus particulièrement, la semi découpe et le logement associés sont réalisés en périphérie du ou desdits orifices de distribution de fluide.

Avantageusement, ledit bloc sert d'enclume lors du sertissage de la plaque sur ledit bloc.

D'autres caractéristiques et avantages apparaîtront à la lecture de la description détaillée d'un mode de réalisation non limitatif de l'invention, en référence aux dessins sur lesquels :
La figure 1 montre en vue éclatée un exemple d'échangeur de chaleur auquel l'invention s'applique;
La figure 2 montre en perspective un ensemble formé par un bloc d'adaptation et une plaque d'extrémité d'un faisceau d'échangeur de chaleur;
La figure 3 montre en perspective et en coupe une technique connue de liaison par clinchage d'un bloc d'adaptation à une plaque d'extrémité d'échangeur de chaleur;
La figure 4 montre en perspective une plaque d'extrémité et un bloc d'adaptation en position pour être assemblés conformément à l'invention ;
La figure 5 montre en perspective un bloc d'adaptation et une plaque d'extrémité liés entre eux conformément à l'invention ;
La figure 6 montre en perspective le détail d'une semi-découpe réalisée sur la plaque d'extrémité.

L'invention concerne un échangeur de chaleur dont un exemple de réalisation a déjà été évoqué plus haut en relation avec la figure 1.

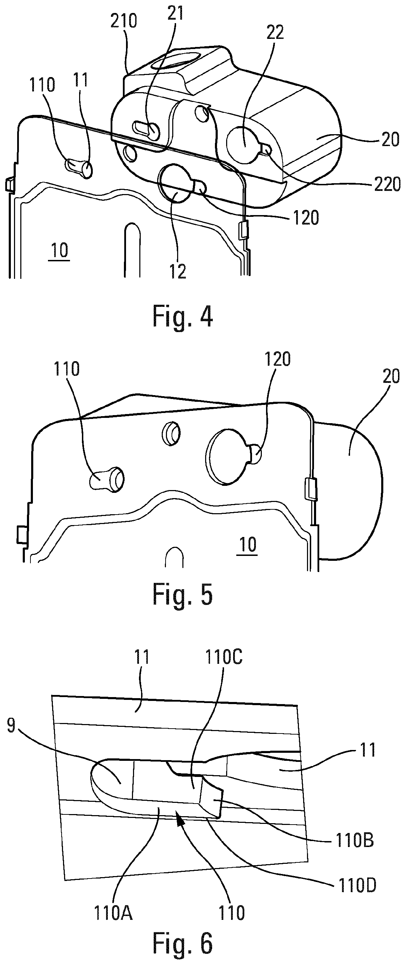

La figure 4 montre un exemple de plaque d'extrémité 10 dudit échangeur. Seule est représentée la partie à proximité des deux orifices 11 et 12 de distribution de fluide. Une semi-découpe, 110 et 120 respectivement, est réalisée en périphérie des deux orifices de distribution. Un bloc dit d'adaptation 20 métallique, aluminium par exemple, est percé de deux conduits 21, 22 qui débouchent sur une face du bloc, celle destinée à être placée contre la plaque d'extrémité. Ce bloc est agencé pour permettre le raccordement de conduits d'un circuit externe à l'échangeur. Le bloc est conformé de manière à pouvoir être placé en vis-à-vis de la plaque d'extrémité dans une position où les deux conduits débouchants 21 et 22 du bloc 20 sont alignés avec les orifices de distribution 11 et 12 correspondant sur la plaque d'extrémité. Des logements 210 et 220 ont été usinés dans la face du bloc située du côté de la plaque et sont agencés pour recevoir les semi-découpes de la plaque d'extrémité. Les logements peuvent être aussi réalisés par un procédé de matriçage à froid, notamment par impact extrusion.

Comme on le voit en détail sur la figure 6, une semi découpe 110, 120 respectivement, comprend une languette 110a, parallèle au plan de la plaque. Cette languette 110a est ici de forme allongé, par exemple sensiblement rectangulaire. Elle est libre sur trois côtés 110b, 110c, 110d en étant rattachée à la plaque sur une partie comprenant le quatrième côté. Le côté libre 110b, opposé au quatrième côté est en retrait par rapport à la périphérie de l'orifice 110 auquel la languette est associée. Il peut être dans le prolongement du bord de l'orifice mais de préférence est conformé de manière à ne pas venir perturber l'écoulement du fluide à travers l'orifice. Sur la figure ce côté est curviligne. La semi-découpe a été réalisée dans une étape antérieure à l'étape d'assemblage, au moyen d'un outil d'emboutissage et de découpe de forme correspondante à celle de l'orifice de distribution 11 à former et de la languette à obtenir.

Les logements 210 et 220 réalisés dans le bloc ont une forme correspondant au contour de la languette qu'ils doivent recevoir, avec un faible jeu latéral. Leur profondeur est suffisante pour que la plaque puisse venir en appui contre la face de contact du bloc, lorsque les languettes sont introduites dans les logements.

La figure 5 montre une plaque d'extrémité et un bloc d'adaptation ainsi assemblés. Les semi-découpes sont réalisées en périphérie des deux orifices en étant opposées de manière à assurer une résistance optimale au dévêtissage des languettes par rapport à leur logement.

Pour assurer la tenue de l'assemblage, un poinçon est introduit dans la cavité de la semi-découpe et une pression de sertissage est exercée par le moyen du poinçon jusqu'à ce qu'une partie de la matière de la languette vienne fluer contre les faces latérales du logement. En raison de la nature massique du bloc, le fond du logement constitue une enclume contre laquelle le poinçon peut être appuyé. La liaison de la languette avec les parois du logement, ainsi obtenue, a une tenue suffisante pour résister aux efforts d'arrachement éventuels auxquels elle est susceptible d'être soumise au cours des différentes manipulations jusqu'au brasage de l'ensemble des composants de l'échangeur dans un four.

Ce mode d'assemblage a été réalisé sur une tôle formant plaque d'extrémité d'un échangeur. La tôle pourra avoir de 0,5 à 2 mm, notamment 1 mm, d'épaisseur. Les orifices pourront avoir un diamètre inférieur à 20 mm tel que, respectivement, un diamètre de 5 et 11 mm. Ils pourront être espacés de 10 à 100 mm, notamment de 46mm. Les languettes venant de la semi-découpe de la tôle, pourront avoir une face extérieure parallèle à la plaque à une distance de 0,5 à 5 mm, notamment 1,5 mm.

## Revendications

1. Echangeur de chaleur comprenant un faisceau d'échange thermique entre fluides, une plaque d'extrémité (10) dudit faisceau, ladite plaque (10) étant pourvue d'orifices (11, 12) de distribution de fluide dans le faisceau, et un bloc d'adaptation (20) à un circuit de fluide externe, ayant un ou des conduits (21, 22) de distribution de fluide en correspondance avec l'un desdits ou lesdits orifices de distribution de la plaque d'extrémité, et étant fixé par une face à la plaque d'extrémité, **caractérisé par le fait que** la plaque d'extrémité (10) comprend au moins une semi-découpe (110, 120) maintenue par sertissage dans un logement (210, 220) ménagé dans la face du bloc (20) en contact avec la plaque.

2. Echangeur selon la revendication 1 dans lequel ledit logement (210, 220) est un logement usiné ou matricé à froid.

3. Echangeur selon l'une quelconque des revendications 1 ou 2 dans lequel ladite semi-découpe (110, 120) est un embouti crevé de ladite plaque d'extrémité (10).

4. Echangeur selon l'une quelconque des revendications 1 à 3 dont la semi-découpe (110, 120) et son logement (210, 220) associé sont situés respectivement en périphérie de l'un des orifices (11, 12) de distribution et de son conduit (21, 22) de distribution associé.

5. Echangeur selon la revendication 4 dans lequel ladite semi-découpe (110, 120) s'étend à partir de la périphérie de l'un des orifices (11, 12) de façon à se trouver en dehors du passage entre ledit faisceau et ledit bloc d'adaptation.

6. Echangeur selon l'une quelconque des revendications 4 ou 5 dans lequel ladite semi-découpe (11, 12) est orientée radialement par rapport audit orifice (11, 12).

7. Echangeur de chaleur selon la revendication précédente dont la plaque d'extrémité (10) comprend deux dits orifices (11, 12) de distribution de fluide associés avec deux dits conduits (21, 22) de distribution sur le bloc d'adaptation (20), une dite semi-découpe (110, 120) étant sertie dans un dit logement (210, 220) à la périphérie de chacun des deux orifices et conduits.

8. Procédé de fixation d'un bloc d'adaptation (20) avec au moins un conduit (21, 22) de distribution de fluide sur une plaque d'extrémité (10) d'un échangeur de chaleur comprenant une étape de mise en place du bloc (20) et de maintien sur la plaque (10) en préparation de leur brasage, procédé **caractérisé par le fait qu'**une semi-découpe (110, 120) est réalisée dans la plaque (10) et un logement (210, 220) dans le bloc (20) de forme correspondante à celle de la semi-découpe, le maintien étant obtenu par sertissage de la semi-découpe de la plaque dans le logement du bloc.

9. Procédé selon la revendication 8 dans lequel ledit logement (210, 220) est formé par usinage ou par matriçage à froid.

10. Procédé selon la revendication 8 ou 9 dans lequel ladite semi-découpe (110, 120) est formée par emboutissage et crevage de ladite plaque d'extrémité (10).

## Patentansprüche

1. Wärmetauscher, der ein Bündel zum Wärmeaustausch zwischen Fluiden, eine Endplatte (10) des Bündels, wobei die Platte (10) mit Öffnungen (11, 12) zur Fluidverteilung im Bündel versehen ist, und einen Anpassungsblock (20) an einen externen Fluidkreislauf enthält, von dem einer oder mehrere Kanäle (21, 22) zur Verteilung von Fluid einer der oder den Verteilungsöffnungen der Endplatte entsprechen, und der mit einer Seite an der Endplatte befestigt ist,
**dadurch gekennzeichnet, dass** die Endplatte (10) mindestens einen Halbausschnitt (110, 120) enthält, der durch Einpressen in einer Aufnahme (210, 220) gehalten wird, die in der Seite des Blocks (20) in Kontakt mit der Platte ausgespart ist.

2. Tauscher nach Anspruch 1, wobei die Aufnahme (210, 220) eine maschinell bearbeitete oder kaltgeprägte Aufnahme ist.

3. Tauscher nach einem der Ansprüche 1 oder 2, wobei der Halbausschnitt (110, 120) ein aufgestochenes Tiefziehteil der Endplatte (10) ist.

4. Tauscher nach einem der Ansprüche 1 bis 3, dessen Halbausschnitt (110, 120) und seine zugeordnete Aufnahme (210, 220) sich am Umfang einer der Verteilungsöffnungen (11, 12) bzw. ihres zugeordneten Verteilungskanals (21, 22) befinden.

5. Tauscher nach Anspruch 4, wobei der Halbausschnitt (110, 120) sich ausgehend vom Umfang einer der Öffnungen (11, 12) erstreckt, um sich außerhalb des Durchgangs zwischen dem Bündel und dem Anpassungsblock zu befinden.

6. Tauscher nach einem der Ansprüche 4 oder 5, wobei der Halbausschnitt (11, 12) bezüglich der Öffnung (11, 12) radial ausgerichtet ist.

7. Wärmetauscher nach dem vorhergehenden Anspruch, dessen Endplatte (10) zwei Öffnungen (11, 12) zur Verteilung von Fluid enthält, die zwei Verteilungskanälen (21, 22) auf dem Anpassungsblock (20) zugeordnet sind, wobei ein Halbausschnitt (110, 120) in eine Aufnahme (210, 220) am Umfang jeder der zwei Öffnungen und Kanäle eingepresst ist.

8. Verfahren zur Befestigung eines Anpassungsblocks (20) mit mindestens einem Fluidverteilungskanal (21, 22) an einer Endplatte (10) eines Wärmetauschers, das einen Schritt des Einsetzens des Blocks (20) und des Halts auf der Platte (10) als Vorbereitung ihres Lötens enthält, wobei das Verfahren **dadurch gekennzeichnet ist, dass** ein Halbausschnitt (110, 120) in der Platte (10) und eine Aufnahme (210, 220) im Block (20) von derjenigen des Halbausschnitts entsprechender Form hergestellt wird, wobei der Halt durch Einpressen des Halbausschnitts der Platte in die Aufnahme des Blocks erhalten wird.

9. Verfahren nach Anspruch 8, wobei die Aufnahme (210, 220) durch maschinelle Bearbeitung oder durch Kaltprägen gebildet wird.

10. Verfahren nach Anspruch 8 oder 9, wobei der Halbausschnitt (110, 120) durch Tiefziehen und Aufstechen der Endplatte (10) gebildet wird.

## Claims

1. Heat exchanger comprising a bundle for heat exchange between fluids, an end plate (10) of said bundle, said plate (10) being provided with orifices (11, 12) for fluid distribution in the bundle, and a block (20) for adaptation to an external fluid circuit, having one or more fluid-distribution ducts (21, 22) in correspondence with one of said or with said distribution orifices of the end plate, and being fastened by one face to the end plate, **characterized in that** the end plate (10) comprises at least one semi-cutout (110, 120) retained by crimping in a seat (210, 220) formed in the face of the block (20) in contact with the plate.

2. Exchanger according to Claim 1, in which said seat (210, 220) is a machined or cold-formed seat.

3. Exchanger according to either one of Claims 1 and 2, in which said semi-cutout (110, 120) is a recessed stamping of said end plate (10).

4. Exchanger according to any one of Claims 1 to 3, of which the semi-cutout (110, 120) and its associated seat (210, 220) are respectively situated at the periphery of one of the distribution orifices (11, 12) and of its associated distribution duct (21, 22) .

5. Exchanger according to Claim 4, in which said semi-cutout (110, 120) extends from the periphery of one of the orifices (11, 12) so as to be situated outside the passage between said bundle and said adaptation block.

6. Exchanger according to either one of Claims 4 and 5, in which said semi-cutout (11, 12) is oriented radially with respect to said orifice (11, 12).

7. Heat exchanger according to the preceding claim, of which the end plate (10) comprises two said fluid-distribution orifices (11, 12) associated with two said distribution ducts (21, 22) on the adaptation block (20), one said semi-cutout (110, 120) being crimped in one said seat (210, 220) at the periphery of each of the two orifices and ducts.

8. Method for fastening an adaptation block (20) with at least one fluid-distribution duct (21, 22) to an end plate (10) of a heat exchanger, comprising a step of placing the block (20) and of retaining it on the plate (10) in preparation for their brazing, which method is **characterized in that** a semi-cutout (110, 120) is formed in the plate (10) and a seat (210, 220) of corresponding shape to that of the semi-cutout is formed in the block (20), retention being achieved by crimping the semi-cutout of the plate in the seat of the block.

9. Method according to Claim 8, in which said seat (210, 220) is formed by machining or cold-forming.

10. Method according to Claim 8 or 9, in which said semi-cutout (110, 120) is formed by stamping and lancing said end plate (10).
